# EUROPEAN PATENT APPLICATION

(11) **EP 1 688 101 A1**
(43) Date of publication of application: **09.08.2006**
(21) Application number: 05002423.1
(22) Date of filing: 04.02.2005
(51) Int. Cl.: A61C 5/04, A61K 6/00

(54) **Dental device for use in the obturation of a root canal**

(71) Applicant: DENTSPLY DETREY GmbH, 78467 Konstanz (DE)
(72) Inventor: Grützner, Andreas E., 78476 Reichenau (DE); Klee, Joachim E., 78315 Radolfzell (DE)
(74) Representative: Hartz, Nikolai

(57) **Abstract**

Dental device for use in the obturation of a root canal, which comprises a tapered obturating point portion integrally connected at the distal end of a functional portion, whereby the functional portion comprises
(a) a neck portion adjacent to the obturating point portion, and
(b) a handle portion.

## Description

### Field of the invention

The present invention relates to a dental device for use in the obturation of a root canal. The present invention also relates to a kit-of-parts containing the dental device according to the invention. The present invention further relates to a process for the preparation of a dental device according to the invention.

### Background of the invention

The total obturation of the root canal system is the primary goal of endodontic therapy. The lack of complete obturation appears to be the most frequent cause of failure of endodontic therapy for the following reason.

The root canal system is complex. Teeth may contain many canals. Incisors may contain two major canals. Premolars may contain three major canals. Molars, especially lower molars, may contain five major canals. Moreover, any major root canal may include loops, fins, lateral and accessory canals. During endodontic therapy, the three-dimensional root canal system must be cleaned and filled with a solid homogenous filling. If these canals are not cleaned and filled, a perpetuation of a lesion is inevitable. Lesions will eventually lead to inflammation and even loss of the tooth.

Dental root canal obturating points for use in endodontic therapy are known. Conventional obturating points are prefabricated polymeric based or metallic cones comprising a broad end and a narrow end (tip). The points are introduced into a root canal during root canal therapy for filling the cleaned and shaped major root canal in a manner to completely obturate the root canal.

In the last decades, gutta-percha cones in combination with a root canal sealer are the most popular material used for root canal filling by lateral condensation or master-point technique. Accordingly, a root canal sealer is applied and a plurality of gutta percha points are inserted to fill the major canal. A first obturating point is placed to seal the apical opening and a number of accessory points are used to fill the remainder of the canal. A sharp steel instrument is used to compress the points and spread the gutta percha in a lateral direction to fill the major and accessory canals. The instrument creates large lateral forces which can fracture the tooth in the absence of extreme care. Moreover, the lowermost point can be forced through the apical opening and into the surrounding tissue, causing inflammation. In addition, the gutta percha frequently adheres to the compression instrument and, unless the instrument is withdrawn cautiously, the filling will be loosened or displaced as the instrument is removed.

To improve the clinical success further and to make the root canal therapy more easily and safe an excellent connection between root canal sealer and cavity wall on the one side and root canal sealer and root canal obturating points must be achieved by a new application technique. Moreover, the preparation process of an obturating point must be easily accomplished at a low cost whereby the obturating points are obtained at a high quality.

US2003/0045604 discloses a soluble and thermoplastic dental root canal cone that is easy to remove, that undergoes a connection to the thermoplastic sealer and which provides a radio-opacity of at least 3 mm/mm Al. The dental root canal filling cones of US2003/0045604 comprise filler and thermoplastic polymer, wherein the thermoplastic polymer is formed by polymerization of polymerizable diepoxide monomer and amine monomer, said amine monomers being primary monoamine and/or a disecondary diamine, said filler comprising 40 to 90 weight-% of said cones providing a radio-opacity of at least 3 mm/mm aluminum. Furthermore, US2003/0045604 discloses a process for the preparation of dental root canal filling cones comprising the steps of thermal addition polymerization of a diepoxide monomer and an amine monomer on the filler surface; and forming (casting) process of the surface-modified filler of by thermal and/or pressure processes. US2003/0045604 does not teach or suggest a dental device for use in the obturation of a root canal.

It is the problem of the present invention to provide a dental device for use in the obturation of a root canal, which may be used to easily apply and remove an obturating point during endodontic therapy, whereby the device may be easily manufactured.

It is a further problem of the present invention to provide kit-of-parts containing a dental device and a root canal sealant having chemical compatibility with the dental device when used in the obturation of a root canal.

Finally, it is a problem of the present invention to provide a process for the preparation of a dental device according to the invention.

### Summary of the Invention

In a first aspect, the present invention provides a dental device for use in the obturation of a root canal, which comprises a tapered obturating point portion integrally connected at the distal end of a functional portion, whereby the functional portion comprises
(a) a neck portion adjacent to the obturating point portion, and
(b) a handle portion.

The invention suggests a new shape and preferably surface of a dental device for use in the obturation of a root canal so as to facilitate handling properties and enhance the precision of the root canal obturation.

The handle portion of a dental device for use in the obturation of a root canal according to the invention may be firmly gripped by the finger of the operator or indirectly with an instrument like tweezers. By applying pressure, the tapered obturating point portion is pushed into its final position. The handle portion is preferably flat and can be easily bypassed by an instrument used to cut back the point at the end of the procedure. A flat surface preferably provided at the handle portion also offers space for imprints to identify size and taper of the point.

The neck portion of a dental device for use in the obturation of a root canal according to the invention connects the handle portion with the intra-canicular tapered obturating point portion. The neck portion may have a reduced diameter in comparison to the tapered obturating point portion which facilitates the cut back of the point at the end of the procedure. In the neck portion a silicon stop may be mounted which helps to control that the tapered obturating point portion reaches its final position that is identical to the length of the root canal preparation instrument used.

The intra-canicular tapered obturating point portion of a dental device for use in the obturation of a root canal according to the invention is preferably shaped like the corresponding root canal instruments. It may exhibit an axial groove which allows excess sealant to escape in a coronal direction. The surface of the intra-canicular tapered obturating point portion preferably has a micro structure which allows an easy and complete wetting of the surface of the point with the root canal sealant and which also improves the bond strength between the root canal point and the root canal sealant.

In a second aspect, the present invention provides a kit-of-parts containing a dental device according to the invention and a dental sealant composition.

In a third aspect, the present invention provides a process for the preparation of a dental device according to the invention, which is characterized by the steps of
(a) providing a thermoplastic polymeric material; and
(b) forming the dental device.

In a fourth aspect, the present invention provides a use of the dental device of the invention for filling a dental root canal.

### Brief description of the Figures

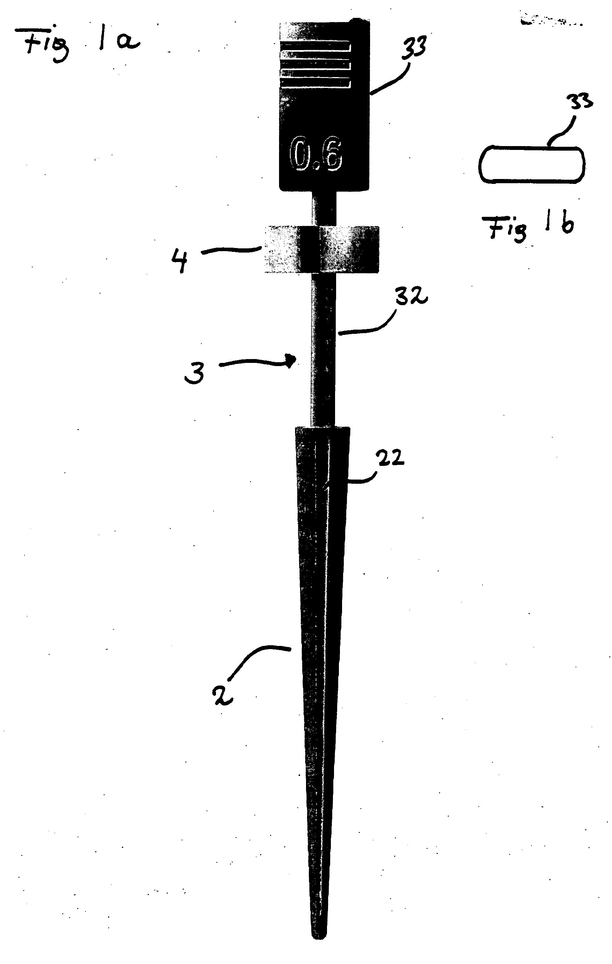

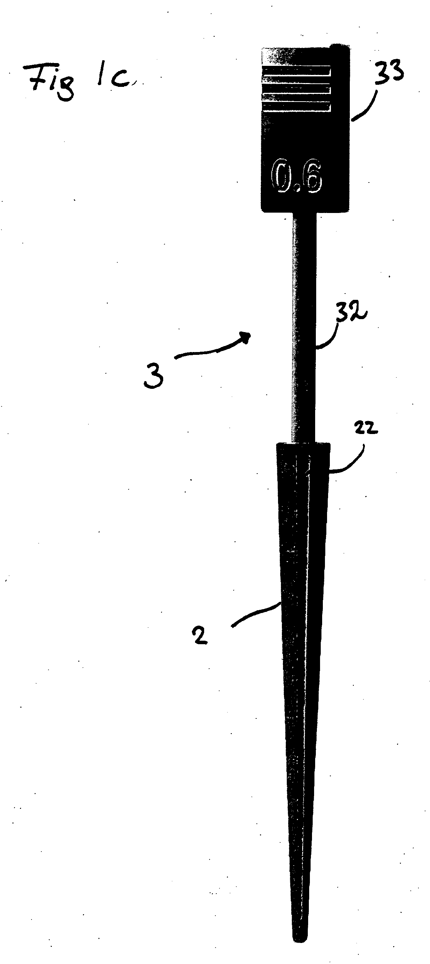

Figure 1 a shows a dental device according to the invention further comprising a stopper means mounted at the neck portion.
Figure 1 b is a schematic representation of the crossection of a flat handle portion of a preferred dental device according to the invention.
Figure 1 c shows a dental device according to the invention.
Figure 1d shows an enlarged view of a shoulder portion integrally connecting the tapered obturating point portion at the distal end of a functional portion.
Figure 2 a-e is an illustration of steps involved in a root canal therapy using the dental device according to the invention.

### Description of the Preferred Embodiments

As shown in Figure 1a, the dental device comprises a tapered obturating point portion 2 integrally connected at the distal end of a functional portion 3, whereby the functional portion 3 comprises a neck portion 32 adjacent to the obturating point portion 2, and a handle portion 33. The handle portion 33 has a flat shape thereby providing a surface for an imprint. Moreover, the flat shape of the handle portion reduces any undesired visual obstruction. The neck portion 32 is provided with a stopper means 4 such as a silicon stopper. The stopper means may be color coded so as to indicate the type or size of the tapered obturating point portion 2. The neck portion 32 has a reduced diameter as compared to the tapered obturating point portion 2, thereby reducing any undesired visual obstruction. Moreover, the reduced diameter of the neck portion 32 improves the cutting efficiency when the functional portion is removed after the tapered obturating point portion 2 has been correctly placed in the root canal during therapy. The tapered obturating point portion 2 may be adapted to the shape of a root canal instrument used for the preparation of the root canal. Moreover, the tapered obturating point portion 2 may comprise one or more elongated channel portions 22 for draining excess sealant

Figure 1b is a schematic representation of the crossection of a flat handle portion 33 of a preferred dental device according to the invention.

Figure 1 c shows a dental device according to the invention which does not comprise a stopper means. Similar to the embodiment shown in Figure 1a, the dental device comprises a tapered obturating point portion 2 integrally connected at the distal end of a functional portion 3. The functional portion 3 comprises a neck portion 32 adjacent to the obturating point portion 2, and a handle portion 33. The neck portion 32 has a reduced diameter as compared to the tapered obturating point portion 2, thereby reducing any undesired visual obstruction. Moreover, the tapered obturating point portion 2 comprises one or more elongated channel portions 22 for draining excess sealant.

Figure 1d shows the shoulder portion of the tapered obturating point portion 2 integrally connected at the distal end of a functional portion. The tapered obturating point portion 2 has a roughened surface with a number recesses distributed over the surface of the tapered obturating point portion 2. The tapered obturating point portion 2 also comprises an elongated channel portion 22 for draining excess sealant.

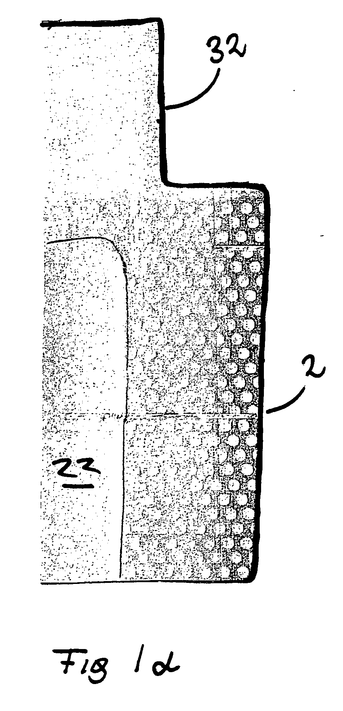

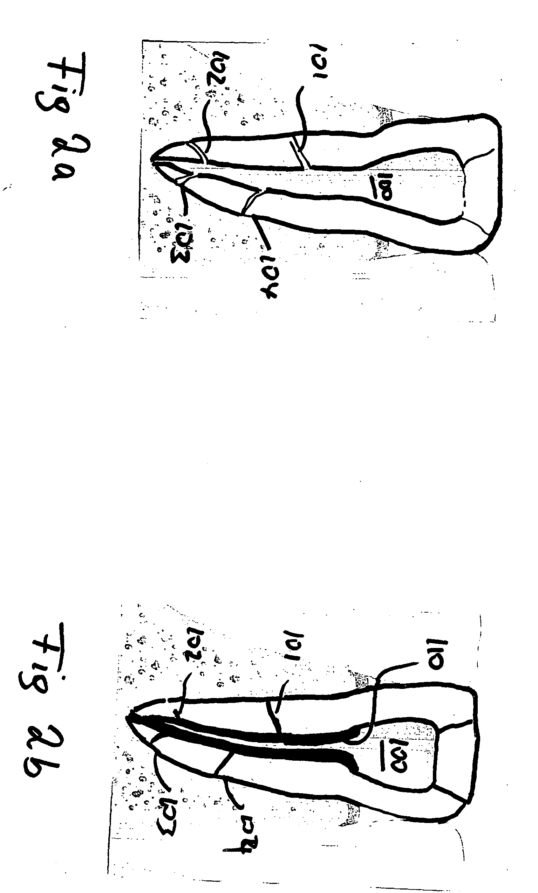

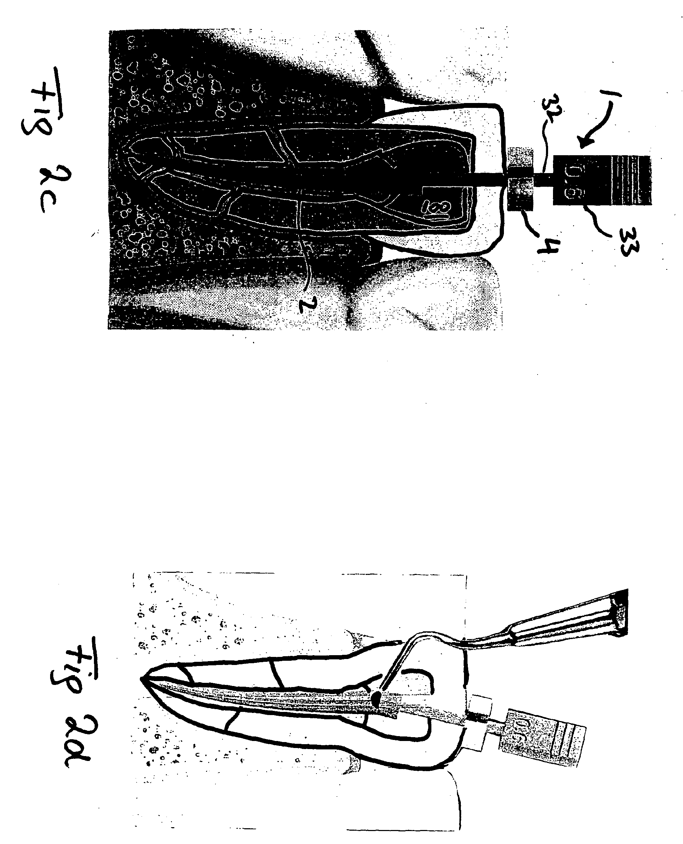

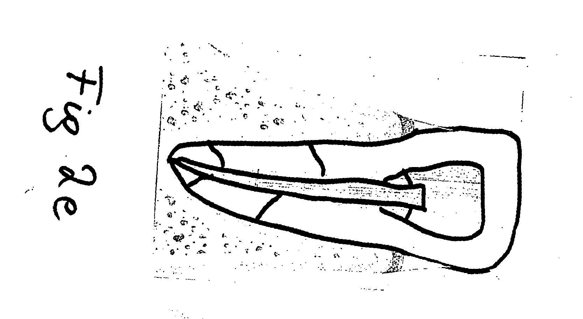

Figure 2 illustrates steps involved in a root canal therapy using the dental device according to the invention. Accordingly, as shown in Figure 2a, a root canal is prepared according to standard methods. The tooth shown has a main root canal 100 and lateral canals 101, 102, 103, and 104. Subsequently, the walls of the prepared root canal 100 are coated with a root canal sealant according to conventional techniques in order to provide a coating 110 of the root canal sealant on the wall of the root canal 100 as illustrated in Figure 2b. The sealant penetrates partially into the lateral canals 101-104. A preferred root canal sealant provides a material when cured which is compatible with the thermoplastic material of the dental device of the present invention. In a next step, a dental device 1 according to the invention is introduced into the root canal 100. The dental device may be held conveniently by the handle portion 33 either directly by hand or indirectly with tweezers. In any case, the mechanical properties of the dental device 1 provide control over the tapered obturating point portion 2 which is pushed forward into the root canal until a desired position of the tapered obturating point portion 2 in the root canal 100 is reached. The depth of the penetration may be easily controlled based on the stopper means 4 which was arranged along the neck portion 32 at a position indicating the distance from the apex of the root canal to the upper limit of the tooth. The distance may easily be mapped to the dental device 1 of the present invention from the dental instrument used for the preparation of the root canal 100. Following the correct placement of the dental device 1 of the invention in the root canal, the device is cut so as to separate the portion of the device permanently remaining in the root canal from the portion including the functional portion of the device. The cutting may preferably be carried out by a hot instrument as shown in Figure 2 d. As a result of the root canal therapy using the dental device according to the invention, the obturating point portion 2 and the sealant form a permanent root canal filling, preferably as a monoblock as shown in Figure 2e.

The dental device according to the invention is preferably made of a polymeric material. The material may be an uncrosslinked thermoplastic material. The dental material may also be a partially crosslinked material suitable for a thermal shaping process. The dental material preferably has a glass transition temperature in the range of from0°C to 150°C, more preferably 20°C to 100°C, still more preferably 35°C to 70°C.

In a preferred embodiment, the tapered obturating point portion of the dental device according to the invention has a roughened or otherwise mechanically or chemically modified surface structure for enhancing wetting and adhesion of the endodontic sealant. The tapered obturating point portion may comprise one or more elongated channel portions for draining excess sealant.

In a preferred embodiment, the handle portion has a non-circular cross section. the neck portion may have a cylindrical cross section. Moreover, it is preferred that the neck portion has a diameter which is the same or smaller than the diameter of the maximum diameter of the obturating point portion.

The dental device according to the invention may further comprise a stopper means slidably provided at the neck portion.

The process for preparing a dental device according to the present invention is not specifically limited. Any process conventionally used for shaping products of the required size may be employed such as a moulding process, such as injection moulding, a thermal pressure forming process, and rapid prototyping, a casting process wherein a composition is polymerized in a mould; or by a mechanical process such as milling a device of the invention from a bulk material. A method using a laser or a water jet are also contemplated for the preparation of a dental device according to the present invention.

Preferably, the dental device may be obtained based on a thermoplastic composition. The thermoplastic composition may comprise a thermoplastic polymer and a filler

In a preferred embodiment, the thermoplastic polymer is formed by polymerization of polymerizable diepoxide monomer and amine monomer. The amine monomers may be selected from primary monoamine and/or a disecondary diamine.

In case the amine monomer contains a primary monoamine, the amine monomer and the epoxide monomer may be polymerized to form an addition polymer having repeating units (I) according to the following scheme 1 :

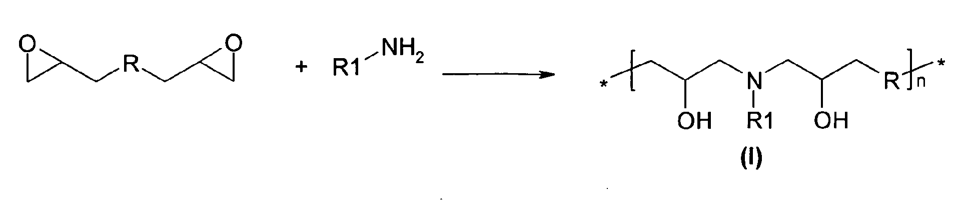

In case the amine monomer contains a disecondary diamine, the amine monomer and the epoxide monomer may be polymerized to form an addition polymer containing repeating units (II) according to the following scheme 2:

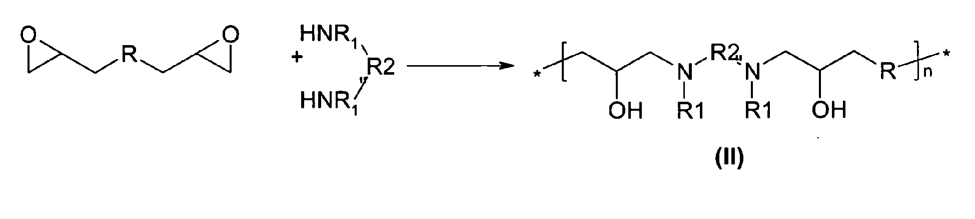

In case the amine monomer contains a mixture of a primary monoamine and disecondary diamine, the amine monomer and the epoxide monomer may be polymerized to form an addition polymer containing repeating units (I) and (II).

In the above schemes 1 and 2, R is a moiety formed from a diepoxide and may be selected from the following groups:

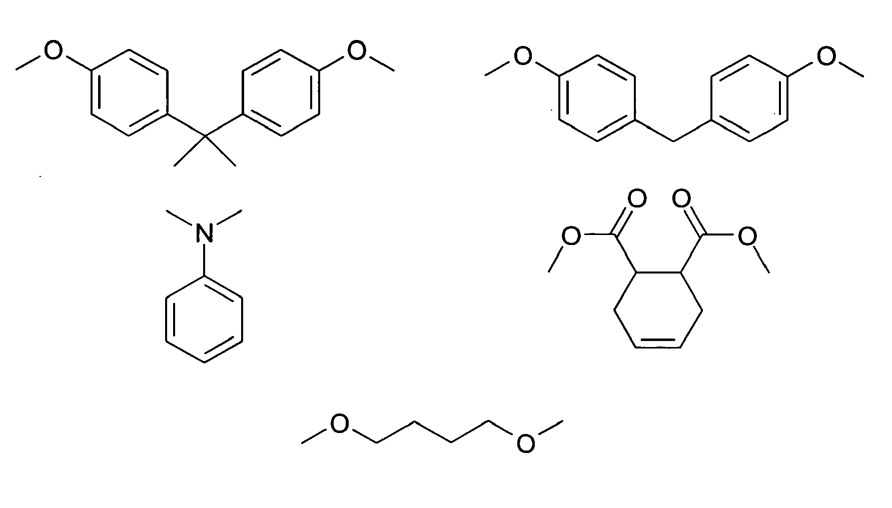

In the above schemes 1 and 2, R1 may be
a substituted C₁ to C₁₈ alkyl group,
a C₁ to C₁₈ polyoxyalkylene group,
a substituted or unsubstituted C₅ to C₁₈ cycloalkyl group,
a substituted or unsubstituted C₅ to C₁₈ aryl or heteroaryl group, whereby the substituted alkyl group, cycloalkyl group, aryl group or heteroaryl group may have 1 to 3 substituents selected from a C₁ to C₆ alkoxy group, a halogen atom such as F, Cl, Br, -COCH₃, NO₂, COOC₂H₅, a hydroxyl group, or a phosphorous containing group such as a phosphonic acid group or a phosphoric acid group.

In the above schemes 1 and 2, R2 may be
a substituted or unsubstituted C₁ to C₁₈ alkylene group which may contain 1 to 5 heteroatoms in the chain, which are selected from oxygen and sulfur atoms,
a substituted or unsubstituted C₁ to C₁₈ alkenylene group which may contain 1 to 5 heteroatoms in the chain, which are selected from oxygen and sulfur atoms,
a substituted or unsubstituted C₅ to C₁₈ cycloalkyl group which may contain 1 to 5 heteroatoms in the ring chain, which are selected from oxygen and sulfur atoms,
a substituted or unsubstituted C₅ to C₁₈ arylene or heteroarylene group, whereby the substituted alkylene group, alkenylene group, cycloalkylene group, arylene group or heteroarylene group may have 1 to 3 substituents selected from a C₁ to C₆ alkoxy group, a halogen atom such as F, Cl, Br, -COCH₃, NO₂, COOC₂H₅, a hydroxyl group, or a phosphorous containing group such as a phosphonic acid group or a phosphoric acid group.

Preferably, the epoxide monomer is a diepoxide selected from the group of diglycidylethers such as diglycidyl ether of bisphenol-A, diglycidyl ether of bis-phenol-F, butandiol diglycidyl ether, N,N-diglycidylaniline or Δ³-tetrahydrophthalic acid diglycidyl ester. As a specific example, bis-2,2-[4-(2,3-epoxypropoxy)-phenyl]-propane may be mentioned.

Preferably, the disecondary diamine is selected from N,N'-dibenzyl ethylene diamine, N,N'-dibenzyl-3,6-dioxa-octandiamine-1,8, N,N'-dibenzyl-5-oxanonane diamine-1,9, N,N'-dibenzyl-(2,2,4)/(2,4,4)-trimethylhexamethylene diamine, N,N'-dicyclohexyl ethylene diamine, and N,N'-dimethyl-p-xylylene diamine. N,N'-dibenzyl-5-oxanonane diamin-1,9 is particularily preferred.

Preferably, the primary monoamine is selected benzylamine, 1-amino adamantane, α-phenethylamine and ethanol amine. 1-Amino adamantane is preferred.

It is possible to use a partially crosslinked thermoplastic material. Cross linking may be carried out by using a small amount of polyfunctional amine or the like in the polycondensation reaction. Moreover, it is possible to use a small amount of monomers having radically polymerizable groups when preparing the thermoplastic material. The radically polymerizable groups may subsequently be polymerized for Cross linking. Partial Cross linking may be used in order to adapt the mechanical properties of the thermoplastic material.

The thermoplastic material may contain the filler in an amount of from 40 to 90 weight-% based on the thermoplastic material. The filler provides a desirable radioopacity and mechanical properties. Preferably, the material has a radio-opacity of at least 3 mm/mm aluminum. The filler may be an inorganic filler such as La₂O₃, ZrO₂, BiPO₄, CaWO₄, BaWO₄, SrF₂, Bi₂O₃. The filler may also be an organic fillers, such as a polymer granulate, splinter polymers. The filler may further be a combination of organic and/or inorganic fillers. The fillers provide preferably a radio-opacity of at least 3 mm/mm Al, more preferably at least 5 to 7 mm/mm Al, most preferably at least 7 mm/mm Al to the material.

In a preferred embodiment, the material is soluble in polar organic solvents such as chloroform, tetrahydrofurane or dimethyl formamide. The material may further contain additives such as a stabilizer and a plasticizer.

According to the invention a dental device for use in the obturation of a root canal may be fabricated out of a material which is much stronger than a conventional gutta percha material and flexible and offers mechanical properties similar to the instruments used to prepare the root canal. Accordingly, the point can easily pass a curved area and can be placed in a controlled manner in the final position, i.e. up to the same length as the root canal was prepared.

The kit-of-parts according to the present invention contains a dental device according to the present invention and a dental sealant composition. Preferably, the dental device is made of a material obtainable by curing a composition containing one or more curable components contained in the dental sealant. The dental device may be made of a material obtainable by a chain growth polymerization reaction or by a step-growth polymerization reaction. In a preferred embodiment, the dental device is made of a material containing an epoxide amine copolymer.

The dental sealant may be an epoxide-amine based root canal such as AH Plus (Dentsply De Trey) having an adhesion of 4 MPa (J D Pecora et al., Braz. Dent. J. 12 (2001) 27) that shows when bonded to the cavity walls of a root canal.

Typically, the formation of the dental device may be carried out by compression molding wherein a heated mold is squeezed around a pre-formed blank. More preferably, the formation of the dental device may be carried out by injection molding wherein a power or pellet is liquified, injected into a mold, cooled under pressure, and ejected. Accordingly, the thermoplastic material containing the addition polymer moves from a hopper means into an injection unit comprising a screw means and heated wall means. Due to the movement of the turning screw means, the material moves along the hot wall means of the injection unit towards the injection nozzle. Due to the hot cylinder wall and the shear forces generated by the screw means, the material is plastified. The injection nozzle is arranged so as to inject the plastified material into a die. According to the present invention, the injection unit is operated so that the material is heated for injection molding at the injection nozzle to a temperature which is 110° to 150°C, preferably 120° to 140°C above the glass transition temperature of the material. Moreover, the injection unit is operated so that the injection pressure is in the range of from 400 to 600 bar. After injection of the material into the die, the die is kept under pressure so as to reduce undesired shrinkage of the solidifying material in the mold. The dental device obtained accordingly is removed from the die after solidification.

The invention will now be illustrated in further detail based on the following examples.

### Example 1

608,434 g (1.787 mol) of bis-2,2-[4-(2,3-epoxypropoxy)-phenyl]-propane, 216,045 g (0.634 mol) N,N'-dibenzyl-5-oxanonane diamin-1,9 and 175,521 g (1.153 mol) amino adamantane, are reacted at ambient temperature in an aluminum vessel for 72 hours at 70°C. The addition polymer thus obtained has a glass transition temperature of Tg = 58,0 °C. The particle size of the bulk polymer is mechanically reduced and the particles are further processed in an injection moulding method.

The polymer is extruded into a mould at a nozzle temperature of 180°C at a pressure of 500 bar.

### Example 2

550,000 g (1,616 mol) bis-2,2-[4-(2,3-epoxypropoxy)-phenyl]-propane, 275,081 g (0,808 mol) N,N'-dibenzyl-5-oxanonane diamine-1,9, 122,991 g (0,808 mol) amino adamantane, 2259,125 g calcium tungstenate (particle size 0,5 µm) and 20,350 g Aerosil A200 are homogeneously mixed in a mixer and the mixture is polymerized at 70°C for 24 hours. After reduction of the particle size of the bulk polymer, extrusion into a mould is carried out at a nozzle temperature of 180°C and a moulding pressure of 500 bar. The points thus obtained have a radioopacity of 10.4 mm/ mm Al and are useful as dental obturating points.

## Claims

1. Dental device for use in the obturation of a root canal, which comprises a tapered obturating point portion integrally connected at the distal end of a functional portion, whereby the functional portion comprises
(a) a neck portion adjacent to the obturating point portion, and
(b) a handle portion.

2. The dental device according to claim 1, which is made of a polymeric material.

3. The dental device according to any one of claims 1 or 2, wherein which is made of a thermoplastic material.

4. The dental device according to any one of claims 1 or 2, wherein which is made of a partially crosslinked material suitable for a thermal shaping process.

5. The dental device according to any one of claims 2 to 4, wherein the material has a glass transition temperature in the range of from 0°C to 150°C.

6. The dental device according to any one of the preceding claims, wherein the tapered obturating point portion has a roughened or mechanically or chemically modified surface structure.

7. The dental device according to any one of the preceding claims, wherein the tapered obturating point portion comprises an elongated channel portion for draining excess sealant.

8. The dental device according to any one of the preceding claims, wherein the handle portion has a non-circular cross section.

9. The dental device according to any one of the preceding claims, wherein the neck portion has a diameter which is the same or smaller than the diameter of the maximum diameter of the obturating point portion.

10. The dental device according to any one of the preceding claims, wherein a stopper means is slidably provided at the neck portion.

11. The dental device according to any one of claims 1 to 9, which is obtained or obtainable by moulding process.

12. The dental device according to any one of claims 1 to 9, which is obtained or obtainable by a process selected from injection moulding, thermal pressure forming process, and rapid prototyping.

13. Kit-of-parts containing a dental device according to any one of the preceding claims and a dental sealant composition.

14. The kit-of-parts according to claim 13, wherein the dental device is made of a material obtainable by curing a composition containing one or more curable components contained in the dental sealant.

15. The kit-of-parts according to claim 13 or 14, wherein the dental device is made of a material obtainable by a chain growth polymerization reaction.

16. The kit-of-parts according to claim 13 or 14, wherein the dental device is made of a material obtainable by a step-growth polymerization reaction.

17. The kit-of-parts according to claim 16, wherein the dental device is made of a material containing an epoxide-amine copolymer.
